# EUROPÄISCHE PATENTSCHRIFT

(11) **EP 4 075 356 B1**
(45) Veröffentlichungstag und Bekanntmachung des Hinweises auf die Patenterteilung: **09.09.2026**
(21) Anmeldenummer: 22171274.8
(22) Anmeldetag: 25.07.2013
(51) Int. Cl.: G06Q 10/08

(54) **SYSTEM UND VERFAHREN FÜR DEN VERSAND VON POSTSENDUNGEN**
SYSTEM AND METHOD FOR SENDING MAIL
SYSTÈME ET PROCÉDÉ D'ENVOI DE COURRIERS POSTAUX

(30) Priorität: 23.07.2013 DE 102013107854
(43) Veröffentlichungstag der Anmeldung: 19.10.2022
(60) Teilanmeldung: 26181694.6 / 4 790 615
(62) Dokumentnummer(n) der früheren Anmeldung(en) nach Art. 76 EPÜ: 13177958.9 / 2 830 026
(73) Patentinhaber: Integer.pl S.A., 30-727 Krakow (PL)
(72) Erfinder: Gruca, Krzysztof, 30-611 Krakau (PL)
(74) Vertreter: Meissner Bolte Partnerschaft mbB

(56) Entgegenhaltungen:
- WO-A1-02/07119
- WO-A1-03/056490
- DE-A1- 102004 027 721
- US-A1- 2009 119 232
- US-A1- 2013 144 428

## Beschreibung

Die vorliegende Erfindung betrifft ein System und Verfahren für den Versand von Postsendungen.

Paketautomaten für das deponieren und abholen von Postsendungen, beispielsweise Briefe oder Pakete, sind hinreichend bekannt. Üblicherweise umfassen entsprechende Paketautomaten eine Vielzahl von Paketfächern zum Einlagern von Postsendungen und einen Terminal mit Eingabe- und Ausgabeeinrichtungen. Beispielsweise kann ein Bildschirm und eine Tastatur vorgesehen werden. Des Weiteren kann das Terminal einen Barcodescanner aufweisen, der es ermöglicht an den Postsendungen angebrachte Kennzeichnungen, beispielsweise Barcodelabels, zu erfassen.

Ein üblicher Deponierungs-/Aufgabevorgang einer Postsendung umfasst mehrere Schritte. Der Benutzer/Kunde muss zunächst Zuhause an einem Computer einen Adressaufkleber mit entsprechendem Barcode generieren und ausdrucken. Häufig erfolgt gleichzeitig mit der Generierung des Adressaufklebers die Abrechnung der Dienstleistung. Danach klebt der Benutzer den Adressaufkleber auf das Paket, sucht einen Paketautomaten auf, scannt den Barcode ein und wählt eine Größe des Pakets aus. Daraufhin öffnet der Paketautomat ein Paketfach, in das die Postsendung eingelegt wird. Der Benutzer schließt das Paketfach und der Paketautomat aktualisiert den Status des am Computer erstellten Versandauftrags.

Im Verlauf des Versendens der Postsendung ermöglicht es die Paketidentifikationskennung zu jedem Zeitpunkt die zugehörigen Empfängerdaten (z.B. Name, Straße, Hausnummer, Postleitzahl, Ort, Land) und gegebenenfalls auch die Absenderdaten (z. B. Name, Straße, Hausnummer, Postleitzahl, Ort, Land) abzufragen.

Für den Transport der Postsendungen besuchen Paketabholer die einzelnen Paketautomaten regelmäßig und entnehmen aufgegebene Postsendungen für den weiteren Transport. Üblicherweise authentisiert sich der Paketabholer an einem Paketautomaten und entnimmt dann alle zur Abholung hinterlegten Postsendungen.

Meist deponiert der Paketabholer gleichzeitig andere Postsendungen, die zu dem entsprechenden Paketautomaten versandt wurden. Auch hierfür ist es notwendig, dass sich der Paketabholer an dem Paketautomaten authentisiert und dann einen Deponiermodus auswählt. In dem Deponiermodus werden üblicherweise die Kennzeichnungen an den Postsendungen gescannt und dann in ein passendes Paketfach eingelegt, das daraufhin verschlossen wird. Ein entsprechendes Verfahren für das Deponieren von Sendungen wird in der DE 103 01 137 A1 beschrieben.

Das bereits erläuterte Verfahren zum Aufgeben von Postsendungen ist aufwendig. Insbesondere ist es nicht dazu geeignet von einem mobilen Gerät ausgeführt zu werden.

Die WO 02/07119 A1 beschreibt ein System und ein Verfahren, um die Auslieferung von Paketen von einem entfernten Standort aus zu koordinieren. Das System umfasst ein Schließfach mit einem Schließmechanismus, der über einen Server gesteuert werden kann. Die WO 02/07119 A1 beschreibt, dass ein Bote Pakete von einem Verkäufer zu dem Schließfach bringt, wobei Kunden die Pakete später abholen können. Die WO 02/07119 A1 beschreibt weiter, dass ein Kunde ein Paket bei einem Paketautomaten zur Zustellung durch einen Lieferservice abgeben kann. Zum Abgeben des Pakets wird der Kunde aufgefordert, die Zustelladresse, das Gewicht und die Größe des Pakets anzugeben. Eine Zusammenfassung wird dem Kunden mitgeteilt, sodass dieser diese ausdrucken und an dem Paket anbringen kann.

Die US 2009/119232 A1 zeigt eine Frankiermaschine, die das Gewicht eines Pakets bestimmt und daraus den zu frankierenden Betrag bestimmt. Dazu wird das Paket in einen von mehreren Schließfächern der Maschine gelegt, wobei das Schließfach anschließend verriegelt wird. Das Schließfach bleibt so lange geschlossen, bis ein Transportunternehmen sich an dem Schließfach zur Abholung des Pakets authentifiziert. Die Maschine ist dazu ausgebildet, nach erfolgreicher Authentifizierung Versandparameter entgegenzunehmen und eine Kennzeichnung mit Informationen über das Paket und die Lieferung zu drucken, die durch das Transportunternehmen an dem Paket angebracht wird.

Ausgehend von der US 2009/119232 A1 ist es Aufgabe der vorliegenden Erfindung ein verbessertes System und Verfahren für den Versand von Postsendungen anzugeben. Insbesondere soll das System und das Verfahren effizienter sein und die Interaktion mit einem Paketautomaten bzw. einem entsprechenden System vereinfachen.

Diese Aufgabe wird durch ein System gemäß dem Anspruch 1 sowie durch ein Verfahren gemäß dem Anspruch 4 gelöst.

Insbesondere wird diese Aufgabe durch ein System für den Versand von Postsendungen gelöst, das umfasst:
- mindestens eine Recheneinheit;
- eine Vielzahl von Paketfächern;
- eine Empfangseinrichtung zum Empfangen eines Versandauftrags, der Empfängerdaten und Absenderdaten umfasst;
- eine Anwendung, die es einem Benutzer ermöglicht, einen Versandauftrag mittels eines Smartphones zu erstellen und an die Empfangseinrichtung zu übermitteln;
- mindestens eine Speichereinrichtung zum Speichern einer Zuordnung eines Paketfachs zu einem Versandauftrag;
- mindestens eine Authentifizierungseinrichtung zur Authentifizierung eines Paketabholers;
- mindestens eine Eingabeeinrichtung und/oder Erfassungseinrichtung zur Eingabe bzw. Erfassung einer Paketidentifikationskennung.

Dabei ist das System dazu ausgebildet, nach einer Authentifizierung eines Paketabholers, in einen Abholmodus für ungekennzeichnete Postsendungen überzugehen und mindestens ein Paketfach zu ermitteln und zu öffnen, das eine Postsendung enthält, für das keine Zuordnung einer Paketidentifikationskennung zu einem Versandauftrag gespeichert ist. Nach dem Öffnen des mindestens einen Paketfachs mit der Postsendung, für das keine Zuordnung einer Paketidentifikationskennung zu einem Versandauftrag gespeichert ist, wird eine Paketidentifikationskennung per Erfassungseinrichtung erfasst und unter Berücksichtigung der erfassten Paketidentifikationskennung und der Zuordnung des jeweiligen Paketfachs zu einem Versandauftrag eine Zuordnung einer Paketidentifikationskennung und dem Versandauftrag zu erzeugen und zu speichern.

Ferner ist das System dazu ausgebildet, eine Eingabe zu empfangen, die angibt, ob eine in ein Paketfach eingelegte Postsendung mit einer Kennzeichnung mit einer Paketidentifikationskennung versehen ist und die Paketidentifikationskennung in Abhängigkeit von dem Paketfach zu speichern.

Ferner ist das System dazu ausgebildet, zu speichern, in welchem Paketfach eine mit einer Paketidentifikationskennung gekennzeichnete Postsendung und in welchem eine nicht mit einer Paketidentifikationskennung gekennzeichnete Postsendung liegt.

Darüber hinaus ist das System dazu ausgebildet, in Abhängigkeit von einer Eingabe durch einen Paketabholer in einen Abholmodus für gekennzeichnete oder ungekennzeichnete Postsendungen überzugehen, wobei das System in dem Abholmodus für gekennzeichnete Postsendungen dazu ausgebildet ist, alle Paketfächer für die gekennzeichneten Postsendungen gleichzeitig zu öffnen und wobei das System in dem Abholmodus für ungekennzeichnete Postsendungen dazu ausgebildet ist, ein einzelnes Paketfach zu öffnen und nach der Entnahme der Postsendung aus dem Paketfach eine Kennzeichnung zu erfassen, die nach der Entnahme auf der Postsendung aufgebracht worden ist.

Ein wesentlicher Gedanke der vorliegenden Erfindung besteht darin, dass bei dem Deponieren einer Postsendung lediglich eine Zuordnung zwischen einem Versandauftrag und einem Paketfach erfolgt. Daher ist es möglich Postsendungen aufzugeben, die über keine Paketkennung, insbesondere keinen Adressaufkleber mit Barcode verfügen. Insofern kann ein entsprechender Versandauftrag ohne die Verwendung eines Druckers beispielsweise direkt am Paketautomaten oder über ein Smartphone oder über einen Laptop, usw. generiert werden. Die Zuordnung des Versandauftrags zu einer bestimmten Paketidentifikationskennung, die vorzugsweise von dem Paketabholer aufgebracht wird, erfolgt erst beim Abholen des Pakets durch den Paketabholer, also nach der Authentifizierung eines Paketabholers an dem System oder dem Paketautomaten. Insofern wird erfindungsgemäß zumindest temporär anstelle der Paketidentifikation bzw. Paketidentifikationskennung eine Paketfachidentifikationskennung (beispielsweise Paketfachnummer und Packstationsnummer/Paketautomatennummer) gespeichert.

Beispielsweise ist es denkbar, dass der Paketabholer eine Vielzahl von Barcodelabels mit entsprechenden Paketidentifikationskennungen zum Abholen der Postsendungen mitbringt und diese beim Entnehmen der Postsendungen aufklebt. Danach muss die Paketidentifikationskennung an das System kommuniziert werden. An dieser Stelle ist es denkbar, eine Eingabeeinrichtung, beispielsweise eine Tastatur, zu verwenden. Vorzugsweise wird eine Erfassungseinrichtung, beispielsweise eine Barcodeleseeinrichtung, verwendet.

Das System kann eine Vielzahl von Paketautomaten, die kommunikativ miteinander und/oder mit mindestens einem Server verbunden sind umfassen. Insofern ist es denkbar die notwendigen Informationen lokal in einem Paketautomaten oder zentral auf einem Server zu speichern. Ebenso können die Daten redundant, d.h. auf dem Server und auf dem Paketautomaten, hinterlegt werden. Die Verwendung eines zentralen Servers ist besonders dann vorteilhaft, wenn das Aufrechterhalten einer ständigen Kommunikationsverbindung zu den einzelnen Paketautomaten teuer oder technisch nicht möglich ist. Insofern können Speichereinrichtungen innerhalb der Paketautomaten als Zwischenspeicher dienen, und die relevanten Daten in Intervallen oder wann immer eine Verbindung zu dem Server besteht, hochgeladen werden.

In einem Ausführungsbeispiel können zumindest einige der Paketautomaten jeweils mindestens eine Recheneinheit, mindestens eine Authentifizierungseinrichtung zur Authentifizierung des Paketabholers und mindestens eine Eingabeeinrichtung und/oder Erfassungseinrichtung zur Eingabe bzw. Erfassung der Paketidentifikationskennung umfassen. Die Erfassungseinrichtung kann beispielsweise eine Barcodeleseeinrichtung oder QR-Codeleseeinrichtung sein. Insgesamt ist es daher möglich, dass der einzelne Paketautomat einige oder alle der bereits beschriebenen Schritte losgelöst von einem Server durchführt. Insbesondere kann der jeweilige Paketautomat dazu ausgebildet sein, nach der Authentifizierung des Paketabholers unter Berücksichtigung der Zuordnung eines Paketfachs zu einem Versandauftragt eine Zuordnung einer Paketidentifikationskennung zu einem Versandauftrag zu erzeugen und zu speichern. Wie bereits erläutert können die hierfür notwendigen Daten lokal oder auf einem anderen Gerät, beispielsweise dem Server, gespeichert werden.

Eine Vielzahl der Paketfächer, beispielsweise alle, können eine Paketerfassungseinrichtung aufweisen. Diese kann es ermöglichen, das Vorhandensein einer Postfachsendung innerhalb des entsprechenden Paketfachs zu detektieren. Insofern kann das System bzw. der Paketautomat feststellen, ob eine Postsendung aus einem bestimmten Paketfach entnommen oder in dieses eingelegt wurde. In dieser Konstellation kann das System und/oder der einzelne Paketautomat dazu ausgebildet sein, beim Beladen eines Paketfachs durch einen Benutzer nur dann eine Zuordnung eines Paketfachs zu einem Versandauftrag zu speichern, wenn die Paketerfassungseinrichtung anzeigt, dass das Paketfach beladen wurde. Die Paketerfassungseinrichtung ermöglicht es also dem System bzw. dem Automaten festzustellen, ob die erforderliche Handlung des Benutzers tatsächlich vorgenommen wurde. Es ist möglich, eine Fehlbedienung oder sogar eine Fehlkonfiguration zu vermeiden.

Alternativ oder zusätzlich kann das System bzw. der jeweilige Paketautomat so ausgebildet sein, beim Leeren eines Paketfachs durch einen Paketabholer nur dann die Zuordnung der Paketidentifikationskennung zu dem Versandauftrag zu erzeugen und zu speichern, wenn die Paketerfassungseinrichtung anzeigt, dass das Paketfach geleert wurde. D.h. die Paketerfassungseinrichtung detektiert, beispielsweise nach einem Schließen des betroffenen Paketfachs, ob die Postsendung tatsächlich entnommen wurde. Eine Aktualisierung der gespeicherten Daten, insbesondere die Zuordnung zu einer bestimmten Paketidentifikationskennung erfolgt nur dann, wenn dies geschehen ist. Beispielsweise wäre es denkbar, dass ein Paketabholer keine Barcodeaufkleber mehr hat, so dass er den Abholvorgang nicht beenden kann. Insofern könnte er das betroffene Paketfach einfach wieder schließen, ohne dass die Zuordnung der Paketidentifikationskennung zum dem Versandauftrag erzeugt und gespeichert wird.

Insofern optimiert das erfindungsgemäße System auch die Interaktion zwischen dem Paketabholer und dem System.

Das System oder die Paketautomaten ist bzw. sind dazu ausgebildet, eine Eingabe zu empfangen, die angibt, ob eine in ein Paketfach eingelegte Postsendung mit einer Kennzeichnung mit einer Paketidentifikationskennung versehen ist und diese Eingabe in Abhängigkeit von dem Paketfach zu speichern. Es ist also denkbar ein System oder einen Paketautomaten bereitzustellen, das bzw. die sowohl das Aufgeben von Postsendungen mit entsprechenden Kennzeichnungen wie auch ohne entsprechende Kennzeichnungen ermöglicht. Beispielsweise kann der Benutzer des Systems nach dessen Authentifizierung oder Registrierung gefragt werden, ob die zu bearbeitende Postsendung über eine entsprechende Kennzeichnung verfügt. Soweit der Benutzer eingibt, dass dies nicht der Fall ist, wird das erfindungsgemäße Verfahren mit der späten Zuordnung der Paketidentifikationskennung zu dem Versandauftrag durchgeführt. Vorzugsweise speichern die einzelnen Paketautomaten oder das System in welchem Paketfach eine gekennzeichnete und in welchem eine nicht gekennzeichnete Postsendung liegt.

Das System bzw. die Automaten ist bzw. sind dazu ausgebildet, nach einer Authentifizierung eines Paketabholers in einen Abholmodus für ungekennzeichnete Pakete überzugehen und mindestens ein Paketfach zu ermitteln und zu öffnen, das ein Paket enthält, für das keine Zuordnung einer Paketidentifikationskennung zu einem Versandauftrag gespeichert ist. Es ist denkbar ein System bzw. einen Paketautomaten zu verwenden, das bzw. die auch beim Abholen von Postsendungen mehrere Modi, umfassend einen Abholmodus für ungekennzeichnete Pakete anbietet. Zusätzlich zu diesem Abholmodus kann ein Abholmodus für gekennzeichnete Pakete bzw. Postsendungen vorgesehen sein. Der Paketabholer kann beispielsweise durch eine Eingabe auswählen, welchen Modus bzw. welche Pakete er entnehmen möchte. Die einzelnen von dem Paketautomaten oder dem System durchgeführten Schritte zur Entnahme der Postsendungen können in Abhängigkeit von dem gewählten Modus (stark) variieren. Beispielsweise ist es denkbar für die Pakete mit Kennzeichnung alle Paketfächer gleichzeitig zu öffnen, während es bei den ungekennzeichneten Paketen sinnvoll sein kann, immer nur ein Paketfach zu öffnen, dieses zu entnehmen, die Kennzeichnung aufzubringen und zu erfassen bzw. einzugeben. Dies vereinfacht die Bedienung des Systems bzw. der Paketautomaten und vermeidet Fehler.

Wie bereits erläutert, ist bzw. sind das System bzw. die Paketautomaten dazu ausgebildet, nach dem Öffnen des mindestens einen Paketfachs mit der ungekennzeichneten Postsendung die Paketidentifikationskennung, vorzugsweise per Erfassungseinrichtung, zu erfassen und dem Versandauftrag zuzuordnen.

Die Empfängerdaten können eine E-Mailadresse und/oder eine Telefonnummer eines Empfängers umfassen. Vorzugsweise handelt es sich bei der Telefonnummer um eine Telefonnummer eines Mobilfunkgeräts, beispielsweise eine Smartphones. In dieser Konstellation kann das System bzw. die Paketautomaten dazu ausgebildet sein, dem Empfänger eine elektronische Nachricht zu übermitteln und Eingaben bezüglich einer Empfängeradresse, insbesondere Daten, die einen von dem Empfänger ausgewählten Paketautomaten bezeichnen, zu empfangen. Auf diese Weise kann das System bzw. der Paketautomat es ermöglichen, dass der Empfänger das geografische Ziel der Postsendung dynamisch nach der Deponierung des Pakets in einem Postfach bestimmt. Der Versender der Postsendung spezifiziert also als Empfängeradresse lediglich die Telefonnummer oder eine E-Mailadresse oder eine beliebige andere Kennung, wie beispielsweise eine frei gewählte Identifikationsnummer. Das System bzw. der Paketautomat stimmt dann mit dem Empfänger ab, wohin die Postsendung geliefert werden soll.

Das System umfasst eine Anwendung, die es einem Benutzer ermöglicht, einen Versandauftrag mittels eines Smartphones und/oder Computers, insbesondere eines tragbaren Computers, zu erstellen und an die Empfangseinrichtung zu übermitteln. Mit dem erfindungsgemäßen System ist es also möglich Versandaufträge ohne die Verwendung eines Druckers auf mobilen Geräten zu generieren.

Die genannte Aufgabe wird des Weiteren durch ein Verfahren gelöst, das die folgenden Schritte umfasst:
a) Entgegennahme eines Versandauftrags von einem Smartphone durch einen Server, der kommunikativ mit einem System wie vorstehend beschrieben verbunden ist, wobei der Versandauftrag Empfängerdaten und Absenderdaten umfasst;
b) Öffnen eines Paketfachs des Systems zur Aufnahme einer Postsendung;
c) Einlegen der Postsendung;
d) Empfangen einer Eingabe, die angibt, ob die Postsendung mit einer Kennzeichnung mit einer Paketidentifikationskennung versehen ist;
e) Speichern der Eingabe in Abhängigkeit von dem Paketfach
f) Feststellen, ob das entriegelte Paketfach geschlossen wurde;
g) Bestimmen einer Paketfachidentifikationskennung des geschlossenen Paketfachs;
h) Speichern einer Zuordnung der Paketfachidentifikationskennung zu dem Versandauftrag;
i) Authentifizieren eines Paketabholers;
j) Öffnen des Paketfachs mit einer Postsendung, die nicht mit einer Kennzeichnung mit einer Paketidentifikationskennung versehen ist;
k) Ausgeben eine Kennzeichnung mit einer Paketidentifikationskennung und Aufbringen der Kennzeichnung auf die Postsendung;
l) Speichern einer Zuordnung der Paketidentifikationskennung zu dem Versandauftrag;
m) Gleichzeitiges Öffnen aller Paketfächer, die eine Postsendung enthalten, die mit einer Kennzeichnung mit einer Paketidentifikationskennung versehen ist.

Dabei werden die Schritte a), b), c), d), e), f), g) und h) in der genannten Reihenfolge ausgeführt.

Erfindungsgemäß erfolgen die Schritte k) und l) nach dem Schritt i). Darüber hinaus werden nach dem Schritt i), die Schritte j) bis I) jeweils für eine Vielzahl von Paketfächern für die Paketfächer, die Postsendungen mit keiner Kennzeichnung enthalten, durchgeführt.

In einer Ausführungsform wird das Verfahren auf einem der vorab beschriebenen Systeme ausgeführt.

Es ergeben sich ähnliche Vorteile wie diese bereits in Verbindung mit dem System beschrieben wurden.

Der Schritt a) kann eine Authentifizierung und/oder Registrierung eines Benutzers mittels eines Computers und/oder eines Smartphones umfassen. In einem Ausführungsbeispiel kann also eine Entgegennahme eines Versandauftrags nur dann erfolgen, wenn sich der Benutzer vorher authentisiert oder registriert hat. Wie bereits erläutert kann eine entsprechende Authentisierung oder Registrierung mittels eines Computers und/oder eines tragbaren Gerätes, beispielsweise eines Smartphones erfolgen.

Der Schritt b) kann ein (erneutes) authentifizieren des Benutzers an einem Paketautomaten umfassen, wobei das Öffnen eines Paketfachs des Paketautomaten nur dann erfolgt, wenn die Authentifizierung erfolgreich abgeschlossen wurde.

Die Zuordnung einer bestimmten Postsendung zu einem bestimmten Versandauftrag kann also dadurch erfolgen, dass der Benutzer sowohl bei der Erzeugung des Versandauftrags sowie bei der Aufgabe der Postsendung authentifizieren werden muss. In einem Ausführungsbeispiel erfolgt diese Authentifizierung einmal vor Ort, beispielsweise am Paketautomaten und einmal entfernt, beispielsweise über ein Smartphone. In einem anderen Ausführungsbeispiel authentisiert und/oder registriert sich der Benutzer nur einmal an einem bestimmten Paketautomaten und gibt vor Ort die Kenndaten des Versandauftrages ein.

Der Schritt h) kann ein Prüfen, ob eine Postsendung in das geöffnete Paketfach eingelegt wurde, umfassen und das Speichern der Zuordnung der Paketfachidentifikationskennung zu dem Versandauftrag nur dann, wenn ein Paket/eine Postsendung eingelegt wurde. Dies verhindert eine Fehlbedienung.

Die oben genannte Aufgabe wird des Weiteren durch ein computerlesbares Medium mit Instruktionen zur Implementierung des beschriebenen Verfahrens gelöst, wobei die Instruktionen zur Ausführung auf einem Computer vorgesehen sind.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Fig. 1:: einen Server, der kommunikativ mit einer Vielzahl von Paketautomaten verbunden ist;
- Fig. 2:: relevante Komponenten eines Paketautomaten aus Fig. 1;
- Fig. 3:: einzelne Komponenten des Servers aus Fig. 1;
- Fig. 4:: eine Auftragsdatentabelle;
- Fig. 5:: eine Paketfachzuordnungstabelle;
- Fig. 6:: eine Benutzertabelle;
- Fig. 7:: ein Ablaufdiagramm eines Deponiervorgangs eines Pakets; und
- Fig. 8:: ein schematisches Ablaufdiagramm eines Abholvorgangs einer Vielzahl von Paketen durch einen Paketabholer.

In der nachfolgenden Beschreibung werden für gleiche und gleichwirkende Teile dieselben Bezugsziffern verwendet.

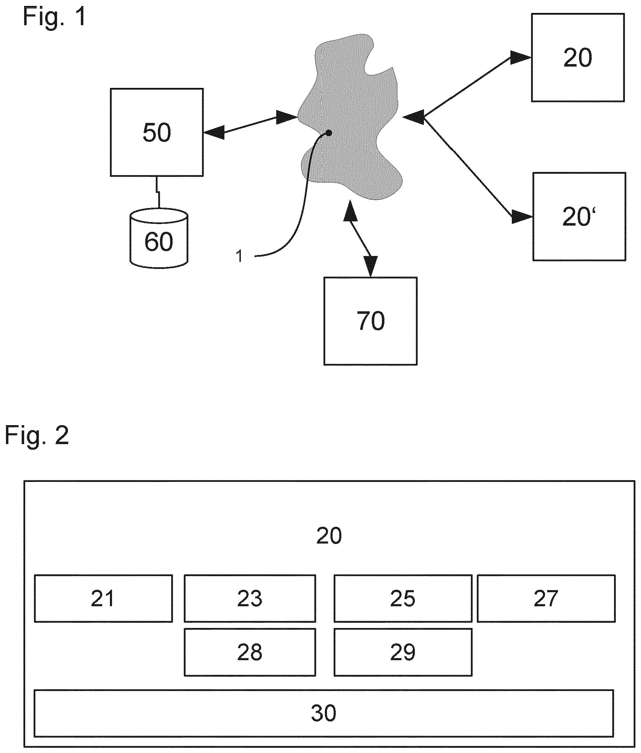

Fig. 1 zeigt ein erfindungsgemäßes System, bei dem ein Server 50 mit einer Vielzahl von Paketautomaten 20, 20' kommunikativ verbunden ist. In der gezeigten Ausführungsform erfolgt die kommunikative Verbindung über ein öffentliches Netzwerk 1. Es ist denkbar für die Kommunikation ein dediziertes Netzwerk, beispielsweise eine Verbindung per GSM oder eine Mischung aus dedizierten und öffentlichen Netzwerken zu verwenden. Gemäß der Fig. 1 verfügt der Server über eine Datenbank 60. Des Weiteren sind eine Vielzahl von internetfähigen Geräten, beispielsweise ein internetfähiges Mobilfunktelefon 70, mit dem Netzwerk 1 verbunden.

In dem nachfolgend beschriebenen Ausführungsbeispiel kommuniziert das Mobilfunktelefon 70 mit dem Server 50. Es ist jedoch auch denkbar, dass das Mobilfunktelefon 70 unmittelbar mit einem der Paketautomaten 20, 20' kommuniziert, um beispielsweise einen Versandauftrag zu erzeugen.

Fig. 2 zeigt einige Komponenten des Paketautomaten 20. Hierbei handelt es sich um eine Eingabeeinrichtung 21, beispielsweise eine Tastatur, eine Ausgabeeinrichtung 23, beispielsweise einen Monitor, eine Verarbeitungseinrichtung 25 und eine Kommunikationseinrichtung 27 zur Kommunikation mit dem Server 50. Des Weiteren sind eine Speichereinrichtung 28 und ein Barcodescanner 29 vorgesehen. Der Barcodescanner 29 kann alle oder einige Funktionen der bereits genannten Eingabeeinrichtung 21 übernehmen. Ebenso kann eine Eingabeeinrichtung 21 in Form beispielsweise einer Tastatur einige oder alle der nachfolgend beschriebenen Aufgaben des Barcodescanners 29 übernehmen. Schließlich hat der Paketautomat 20 noch eine Vielzahl von Paketfächern 30, die sich automatisch öffnen lassen.

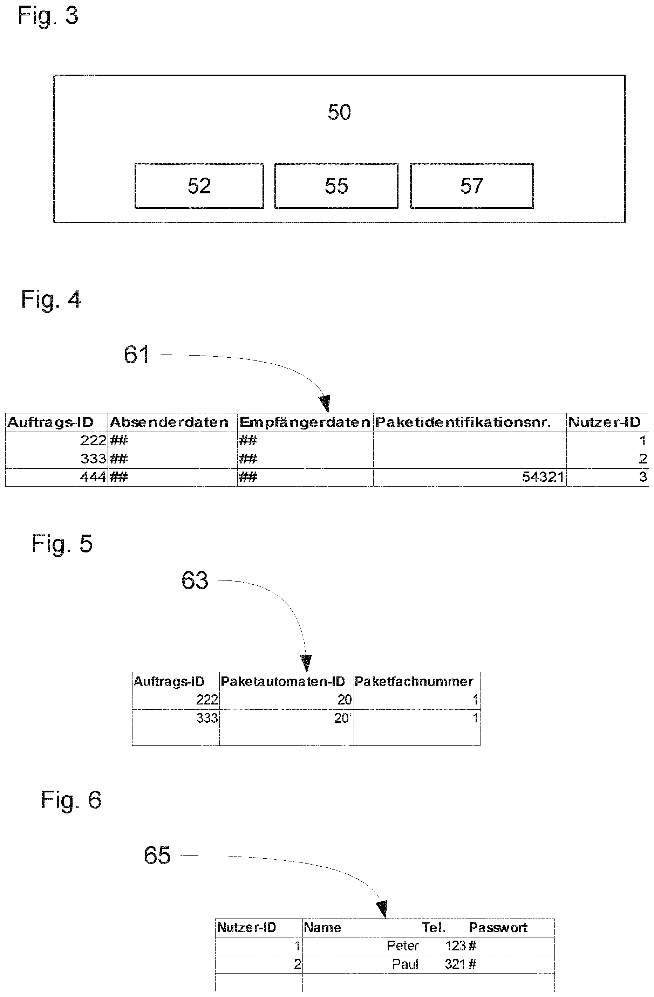

Die Fig. 3 zeigt einzelne Komponenten des Servers 50, der wie bereits erläutert Zugriff auf eine Datenbank 60 hat. Bei diesen Komponenten handelt es sich um ein SMS-Gateway 52, eine Server-Verarbeitungseinrichtung 55 und eine Server-Kommunikationseinrichtung 57 zur Kommunikation über das Netzwerk 1.

In dem beschriebenen Ausführungsbeispiel werden für den Versand des Pakets wichtige Informationen zentral in der Datenbank 60 des Servers 50 gespeichert. Die Datenbank 60 enthält eine Auftragsdatentabelle 61 (Fig. 4) zum Speichern von Versandaufträgen, eine Paketfachzuordnungstabelle 63 zur Zuordnung eines bestimmten Paketfachs 30 zu einem bestimmten Versandauftrag und eine Benutzertabelle 65 (Fig. 6) zur Speicherung von Benutzerdaten, insbesondere mit Authentifizierungsdaten.

Im Einzelnen umfasst die Auftragsdatentabelle 61 die folgenden Spalten:
- Eine Auftrags-ID;
- Absenderdaten;
- Empfängerdaten;
- Eine Paketidentifikationsnummer; und
- Eine Nutzer-ID.

In dem in Fig. 4 gezeigten Beispiel sind in der Auftragsdatentabelle 61 drei Versandaufträge gespeichert. Ein erster Versandauftrag hat die Auftrags-ID 222, Absenderdaten, Empfängerdaten und eine Nutzer-ID 1. Die Paketidentifikationsnummer ist für diesen Datensatz leer, was anzeigen soll, dass noch keine Paketidentifikationsnummer zugeordnet wurde. Ein zweiter Versandauftrag hat die Auftrags-ID 333, Absenderdaten, Empfängerdaten und die Nutzer-ID 2. Die Paketidentifikationsnummer ist ebenfalls unbelegt.

Ein dritter Versandauftrag hat die Auftrags-ID 444, Absenderdaten, Empfängerdaten und die Nutzer-ID 3. Für den Datensatz des dritten Versandauftrags ist das Feld der Paketidentifikationsnummer mit der Nummer 54321 belegt, was anzeigt, dass dem dritten Versandauftrag die Paketidentifikationsnummer 54321 zugeordnet wurde.

Die Benutzertabelle 65 enthält rein exemplarisch lediglich zwei Benutzer. Die einzelnen Spalten enthalten Daten bezüglich:
- Einer Nutzer-ID;
- Eines Namens;
- Einer Telefonnummer; und
- Eines Passworts.

Die Benutzertabelle 65 gibt an, dass der erste Versandauftrag aus der Auftragsdatentabelle 61 einem Benutzer mit dem Namen "Peter" zugeordnet ist, der die Telefonnummer 123 hat. Ebenso lässt sich anhand der Benutzertabelle 65 feststellen, dass der zweite Versandauftrag einem Nutzer mit dem Namen "Paul" zugeordnet ist, der die Telefonnummer 321 hat. Für beide Benutzer ist ein Passwort eingetragen. Die Zuordnung der Einträge zwischen der Auftragsdatentabelle 61 und der Benutzertabelle 65 erfolgt anhand der Nutzer-ID.

Die Paketfachzuordnungstabelle 63 hat Spalten für Daten bezüglich:
- Einer Auftrags-ID;
- Einer Paketautomaten-ID; und
- Einer Paketfachnummer.

Die erste Zeile der Paketfachzuordnungstabelle 63 gibt an, dass der erste Versandauftrag mit der Auftrags-ID 222 in dem Paketautomaten 20 mit der Paketautomaten-ID 20 im ersten Paketfach mit der Paketfachnummer 1 gelagert ist. Die zweite Spalte der Paketfachzuordnungstabelle 63 gibt an, dass das Paket für den zweiten Versandauftrag mit der Auftrags-ID 333 im zweiten Paketautomaten 20' mit der Paketautomaten-ID 20' im ersten Paketfach mit der Paketfachnummer 1 lagert.

Im Endeffekt gibt der in der Auftragsdatentabelle 61 und der Paketfachzuordnungstabelle 63 gezeigte Zustand an, dass die Pakete des ersten und zweiten Versandauftrags in dem ersten Paketautomaten 20 bzw. den zweiten Paketautomaten 20' von einem Benutzer eingelagert wurden. Keines dieser Pakete wurde gemäß den bestehendem Zustand von einem Paketabholer abgeholt und mit einer Kennung versehen, die eine eindeutige Identifizierung der Postsendung, losgelöst von dem in der Paketfachzuordnungstabelle 63 angegebenen Paketfach, ermöglichen würde. Das Paket zu dem dritten Versandauftrag wurde bereits von einem Paketabholer gekennzeichnet und mit der Paketidentifikationsnummer 54321 versehen. Daher existiert in der Paketfachzuordnungstabelle 63 kein entsprechender Eintrag mehr und die Spalte der Auftragsdatentabelle 61 mit den Paketidentifikationsnummern enthält einen entsprechenden Eintrag.

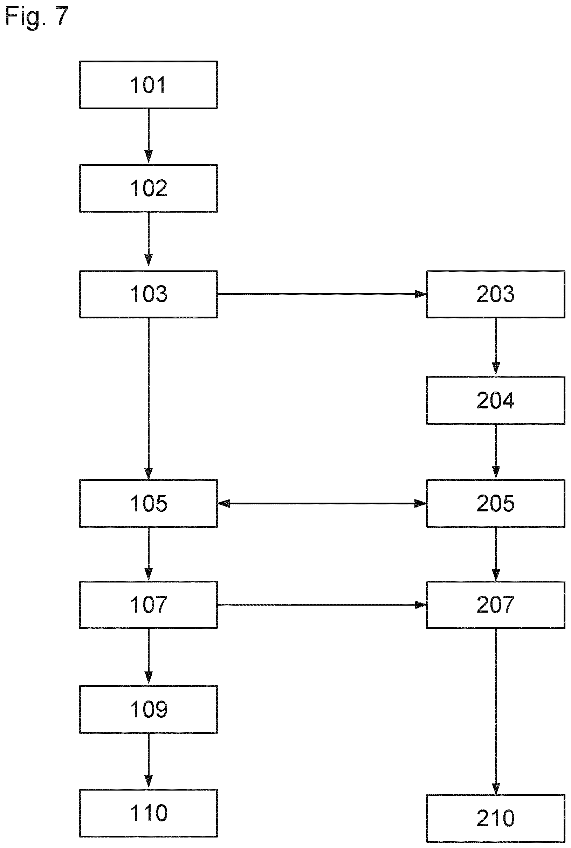

Der Einlagerungsvorgang in einem der Paketautomaten 20, 20' wird nachfolgend anhand des Ablaufdiagramms gemäß Fig. 7 beschrieben.

Zunächst authentisiert sich ein Benutzer an dem Server 50 in einem Authentisierungsschritt 101. In diesem Schritt kann der Benutzer aufgefordert werden seinen Benutzernamen und ein Passwort einzugeben. Dieser Benutzername und das Passwort können mit den in der Benutzertabelle 65 gespeicherten Daten abgeglichen werden. Nach einer erfolgreichen Authentisierung des Benutzers erzeugt der Benutzer in einem Erzeugungsschritt 102 einen Versandauftrag. Exemplarisch wird nachfolgend davon ausgegangen, dass es sich hierbei um einen vierten Versandauftrag handelt. Dieser vierte Versandauftrag wird in einem Übermittlungsschritt 103 an den Server 50 übermittelt, der den vierten Versandauftrag empfängt (Schritt 103) und speichert (Schritt 204). Das Speichern erfolgt in dem beschriebenen Ausführungsbeispiel in der Auftragsdatentabelle 61, wobei eine eindeutige Auftrags-ID, beispielsweise 555, generiert wird. Der vierte Versandauftrag umfasst Informationen zum Absender sowie zum Empfänger. Theoretisch ist es denkbar auf die Absenderdaten zu verzichten, da die Nutzer-ID eine eindeutige Zuordnung zu einem bestimmten Nutzer vornimmt. Die entsprechenden Einträge in der Benutzertabelle 65 können als Absenderdaten verwendet werden. Die Empfängerdaten können sehr konkrete Angaben zu einem bestimmten Paketautomaten 20, 20', eine postalische Adresse oder personenbezogene Daten sein. Beispielsweise ist es denkbar den Empfänger ausschließlich anhand einer Benutzerkennung, einer Telefonnummer oder einer E-Mailadresse zu identifizieren und später konkrete Zustelldaten zu ermitteln.

Gemäß Fig. 7 geht der Benutzer nach dem Übermitteln des Versandauftrags (Schritt 103) zu einem Paketautomaten, beispielsweise dem ersten Paketautomaten 20. Dort ist es notwendig, dass er sich ein weiteres Mal direkt am Paketautomaten 20 authentisiert (Schritt 105). Im beschriebenen Ausführungsbeispiel nimmt der Paketautomat 20 die Eingaben des Benutzers entgegen und sendet diese an den Server 50 weiter, so dass auch hier eine Authentifizierung durch den Server 50 erfolgt (Schritt 205). Danach wird der Benutzer zur Auswahl einer Paketfachgröße vom Paketautomaten 20 aufgefordert. In einem Auswahlschritt 107 erfolgt eine entsprechende Auswahl, die an den Paketautomaten 20 kommuniziert und von diesem empfangen wird. Der Paketautomat 20 ermittelt ein freies Paketfach 30 und öffnet dieses (Schritt 207), so dass der Benutzer in einem Einlegeschritt 109 das Paket einlegen kann. Daraufhin schließt der Benutzer das entsprechende Paketfach 30, was wiederum von dem Paketautomat 20 detektiert wird und diesen veranlasst zu ermitteln, welcher Versandauftrag von dem authentifizierten Benutzer in der letzten Zeit gespeichert wurde. Das Paketfach 30 ermittelt also den vierten Versandauftrag und speichert hierzu in der Paketfachzuordnungstabelle 63 einen entsprechenden Eintrag (Schritt 210), so dass es anhand der Daten in der Datenbank 60 möglich ist, zu ermitteln in welchem Paketfach 30 sich das Paket zu dem vierten Versandauftrag befindet.

Theoretisch ist es möglich, dass ein Benutzer mehrere Versandaufträge generiert hat und die entsprechenden Pakete gleichzeitig abgeben möchte. In diesem Fall kann der Benutzer nach einem Schließen eines ersten Paketfachs 30 gefragt werden, welches Paket gerade eingelegt wurde. Eine Identifikation des Versandauftrags kann anhand einer Nummer oder anhand der Empfängerdaten erfolgen. Alternativ wäre es möglich unmittelbar nach dem Schritt der Authentifizierung 205 den Benutzer aufzufordern, einen bestimmten Versandauftrag auszuwählen oder zu bestätigen, dass ein bestimmter Versandauftrag nun bearbeitet wird.

In dem beschriebenen Ausführungsbeispiel können die Schritte 101 bis 103 anhand eines Mobilfunktelefons 70 durchgeführt werden. Erfindungsgemäß kann aber auch auf eine doppelte Authentifizierung des Benutzers verzichtet werden, wenn der vierte Versandauftrag unmittelbar anhand der Eingabeeinrichtung 21 und Ausgabeeinrichtung 23 an dem Paketautomaten 20 erstellt wird. Des Weiteren wäre es denkbar eine vorläufige Identifikationsnummer für den vierten Versandauftrag zu generieren, die als Authentifizierung ausreicht, um das Durchführen der Schritte 107 bis 110 zu ermöglichen.

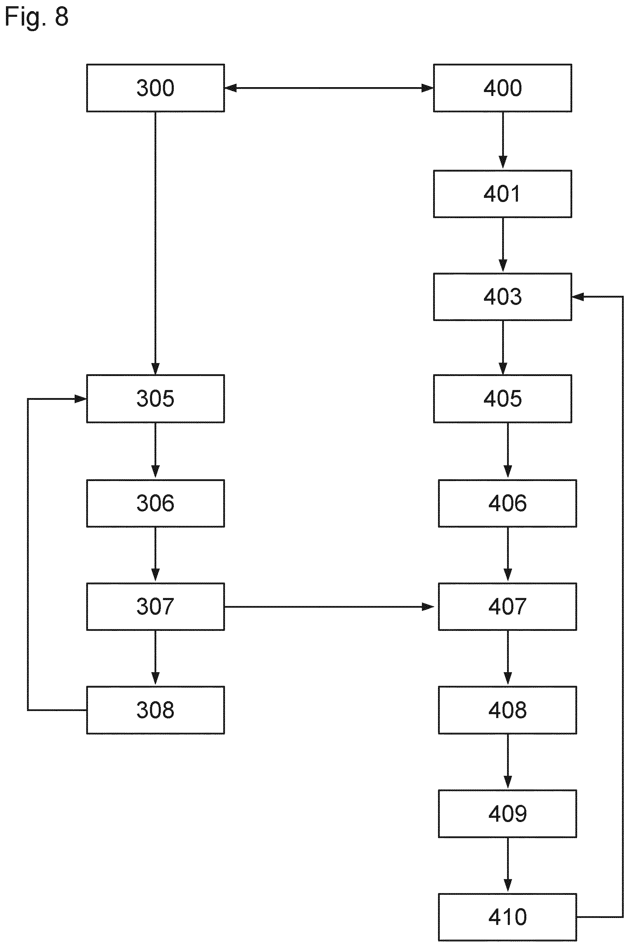

Das Abholen einer Vielzahl von Paketen durch einen Paketabholer wird anhand des Ablaufdiagramms gemäß Fig. 8 erläutert. In einem Authentisierungsschritt 300 authentisiert sich der Paketabholer an einem bestimmten Paketautomaten, beispielsweise dem Paketautomaten 20. Auch in diesem Fall kann der Paketautomat 20 die Eingaben des Paketabholers empfangen und an den Server 50 zur Authentifizierung weiterleiten. Der Server führt dann einen Authentifizierungsschritt 400 durch, der es dem Paketabholer erlaubt Pakete aus einzelnen Paketfächern 30 zu entnehmen. In einem Ausführungsbeispiel ist der Paketautomat 20 ausschließlich dazu geeignet ungekennzeichnete Pakete aufzunehmen. Insofern kann in einem Auswahlschritt 401 festgestellt werden, welche Paketfächer 30 mit Paketen zur Abholung befüllt sind. Der Paketautomat 20 öffnet dann eines der befüllten Fächer (Schritt 403). In einem anderen Ausführungsbeispiel enthält der Paketautomat 20 gekennzeichnete und nicht gekennzeichnete Pakete. Der Paketautomat 20 kann dann in dem Schritt 401 anhand der Paketfachzuordnungstabelle 63 ermitteln, welche Paketfächer 30 mit ungekennzeichneten Paketen befüllt sind. Beispielsweise kann die entsprechende Tabelle lediglich dann ein Eintrag vorgesehen sein, wenn das entsprechende Paket ungekennzeichnet ist. Alternativ kann wie in Fig. 4 ein fehlender Eintrag in der Spalte "Paketidentifikationsnummer" anzeigen, dass das zugehörige Fach (Fig. 5) ein ungekennzeichnetes Paket enthält. Des Weiteren könnte der Paketautomat 20 mit dem Paketabholer in Interaktion treten, um festzustellen, ob dieser gekennzeichnete oder ungekennzeichnete Pakete abholen möchte.

Unabhängig hiervon wird in einem nächsten Schritt, nach der Öffnung eines Postfachs 30 mit einem ungekennzeichneten Paket, das Paket aus dem Paketfach 30 entnommen und das Paketfach 30 wieder verschlossen (Schritt 305). Der Paketautomat 20 prüft, ob das Paket tatsächlich entnommen wurde (Prüfungsschritt 405). Währenddessen kann der Paketabholer eine Kennzeichnung, beispielsweise in Form eines Barcodeaufklebers auf dem Paket aufbringen (Aufklebeschritt 306). In dem Aktivierungsschritt 406 aktiviert der Paketautomat den Barcodescanner 29, so dass der Paketabholer den aufgebrachten Barcode scannen kann (Schritt 307). Der Server 50 empfängt die gescannte Paketidentifikationsnummer in Schritt 407, bestimmt anhand der Paketfachzuordnungstabelle 63 und der Auftragsdatentabelle 61 den zugehörigen Versandauftrag (Schritt 408) und speichert die Paketidentifikationsnummer zu dem aufgefundenen Versandauftrag (Schritt 409). Nach der Durchführung dieser Schritte kann ein Eintrag in der Auftragsdatentabelle 61 so aussehen wie dies in der dritten Zeile zu dem dritten Versandauftrag mit der Auftrags-ID 444 gezeigt ist. Der zugehörige Eintrag in der Paketfachzuordnungstabelle 63 kann gelöscht werden.

Der Paketautomat 20 fährt in Schritt 410 mit den noch verbleibenden mit ungekennzeichneten Paketen befüllten Paketfächern 30 fort. Im Endeffekt werden die Schritte 403, 405, 406, 407, 408 und 409 solange durchlaufen, bis alle ausgewählten Paketfächer 30 abgearbeitet wurden oder der Paketabholer den Vorgang aus irgend einem anderen Grund, beispielsweise dem Fehlen von weiteren Barcodeaufklebern, abbricht.

Der Paketabholer schließt das zuletzt geöffnete Paketfach 30 (Schritt 308) und fährt mit dem nächsten geöffneten Paketfach 30 in Schritt 305 fort.

In den beschriebenen Ausführungsbeispielen wird ein Barcode als Kennzeichnung für die Pakete bzw. Postsendungen verwendet. Es ist jedoch ohne Weiteres denkbar eine andere Kennzeichnung, beispielsweise anhand eines QR-Codes, eines alphanummerischen Codes, usw. der Postsendungen vorzunehmen.

In den beschriebenen Ausführungsbeispielen wird die Kennzeichnung mittels des Barcodescanners 29 erfasst. Theoretisch kann die Eingabe der Paketidentifikationsnummer jedoch auch manuell erfolgen oder über eine RF-ID-Leseeinrichtung ermittelt werden.

Die Kennzeichnungen für die Pakete, die vorzugsweise an diesen befestigbar sind, können von dem Paketabholer mitgebracht werden. Alternativ gibt es nur für den Paketabholer zugänglich eine Vielzahl von Kennzeichnungen, die bei dem jeweiligen Paketautomaten 20, 20' hinterlegt sind.

In den Ausführungsbeispielen werden der Versand und die Abholung eines Pakets beschrieben. Es ist offensichtlich, dass die erfindungsgemäßen Verfahren und Vorrichtungen für den Versand und die Abholung jedes Gegenstands, insbesondere von jeder beliebigen Postsendung, verwendet werden können.

### Bezugszeichenliste

- 1: Netzwerk
- 20, 20': Paketautomat
- 21: Eingabeeinrichtung
- 23: Ausgabeeinrichtung
- 25: Verarbeitungseinrichtung
- 27: Kommunikationseinrichtung
- 28: Speichereinrichtung
- 29: Barcodescanner
- 30: Paketfach
- 50: Server
- 52: SMS-Gateway
- 55: Server-Verarbeitungseinrichtung
- 57: Server-Kommunikationseinrichtung
- 60: Datenbank
- 61: Auftragsdatentabelle
- 63: Paketfachzuordnungstabelle
- 65: Benutzertabelle
- 70: Mobilfunktelefon
- 101: Schritt des Authentisierens an dem Server
- 102: Schritt des Erzeugens eines Versandauftrags
- 103: Schritt des Übermittelns des Versandauftrags an den Server
- 105: Schritt des Authentisierens des Benutzers an einem Paketautomaten
- 107: Schritt der Größenauswahl
- 109: Schritt des Einlegens des Pakets
- 110: Schritt des Schließens des Paketfachs
- 203: Schritt des Empfangens eines Versandauftrags
- 204: Schritt des Speicherns des Versandauftrags
- 205: Schritt des Authentifizierens eines Benutzers an einem Paketautomaten
- 207: Schritt des Auswählens und Öffnen eines Paketfachs
- 210: Schritt des Speicherns einer Zuordnung eines Paketfachs zu einem Versandauftrag
- 300: Schritt des Authentifizierens an einem Paketautomaten
- 305: Schritt des Entnehmens eins Pakets und des Schließens eines Paketfachs
- 306: Schritt des Aufklebens einer Kennzeichnung
- 307: Schritt des Scannens einer Kennzeichnung
- 308: Schritt des Schließens des Paketfachs
- 400: Schritt des Authentifizierens eines Paketabholers
- 401: Schritt des Auswählens aller Paketfächer mit ungekennzeichneten Paketen
- 403: Schritt des Öffnens eines Paketfachs
- 405: Schritt des Prüfens des Paketfachs
- 406: Schritt des Aktivierens eines Barcodescanners
- 407: Schritt des Empfangens einer Paketidentifikationsnummer
- 408: Schritt des Bestimmens eines zugehörigen Auftrags anhand der Paketfachzuordnungstabelle
- 409: Schritt des Speicherns der Paketidentifikationsnummer
- 410: Schritt des Fortfahrens mit dem nächsten Paketfach

## Patentansprüche

1. System für den Versand von Postsendungen, umfassend:
- mindestens eine Recheneinheit (25, 35);
- eine Vielzahl von Paketfächern (30);
- eine Empfangseinrichtung (27, 57) zum Empfangen eines Versandauftrags, der Empfängerdaten und Absenderdaten umfasst;
- eine Anwendung, die es einem Benutzer ermöglicht, einen Versandauftrag mittels eines Smartphones (70) zu erstellen und an die Empfangseinrichtung (27, 57) zu übermitteln;
- mindestens eine Speichereinrichtung (60) zum Speichern einer Zuordnung eines Paketfachs (30) zu einem Versandauftrag;
- mindestens eine Authentifizierungseinrichtung zur Authentifizierung eines Paketabholers;
- mindestens eine Eingabeeinrichtung (21) und/oder Erfassungseinrichtung (29) zur Eingabe bzw. Erfassung einer Paketidentifikationskennung;
wobei das System dazu ausgebildet ist, nach einer Authentifizierung eines Paketabholers, in einen Abholmodus für ungekennzeichnete Postsendungen überzugehen und mindestens ein Paketfach (30) zu ermitteln und zu öffnen, das eine Postsendung enthält, für das keine Zuordnung einer Paketidentifikationskennung zu einem Versandauftrag gespeichert ist und
nach dem Öffnen des mindestens einen Paketfachs (30) mit der Postsendung, für das keine Zuordnung einer Paketidentifikationskennung zu einem Versandauftrag gespeichert ist, eine Paketidentifikationskennung per Erfassungseinrichtung zu erfassen und unter Berücksichtigung der erfassten Paketidentifikationskennung und der Zuordnung des jeweiligen Paketfachs (30) zu einem Versandauftrag eine Zuordnung einer Paketidentifikationskennung und dem Versandauftrag zu erzeugen und zu speichern,
wobei das System dazu ausgebildet ist, eine Eingabe zu empfangen, die angibt, ob eine in ein Paketfach eingelegte Postsendung mit einer Kennzeichnung mit einer Paketidentifikationskennung versehen ist und die Paketidentifikationskennung in Abhängigkeit von dem Paketfach zu speichern,
wobei das System dazu ausgebildet ist, zu speichern, in welchem Paketfach eine mit einer Paketidentifikationskennung gekennzeichnete Postsendung und in welchem eine nicht mit einer Paketidentifikationskennung gekennzeichnete Postsendung liegt,
wobei das System dazu ausgebildet ist, in Abhängigkeit von einer Eingabe durch einen Paketabholer in einen Abholmodus für gekennzeichnete oder ungekennzeichnete Postsendungen überzugehen, wobei das System in dem Abholmodus für gekennzeichnete Postsendungen dazu ausgebildet ist, alle Paketfächer für die gekennzeichneten Postsendungen gleichzeitig zu öffnen und
wobei das System in dem Abholmodus für ungekennzeichnete Postsendungen dazu ausgebildet ist, ein einzelnes Paketfach zu öffnen und nach der Entnahme der Postsendung aus dem Paketfach eine Kennzeichnung zu erfassen, die nach der Entnahme auf der der Postsendung aufgebracht worden ist.

2. System nach Anspruch 1,
**gekennzeichnet durch**
eine Vielzahl von Paketautomaten (20, 20') die kommunikativ miteinander und/oder mit mindestens einem Server (50) verbunden sind,
wobei zumindest einige der Paketautomaten (20, 20') jeweils
- mindestens eine Recheneinheit (25),
- mindestens eine Authentifizierungseinrichtung zur Authentifizierung des Paketabholers und
- mindestens eine Eingabeeinrichtung (21) und/oder Erfassungseinrichtung (29) zur Eingabe bzw. Erfassung der Paketidentifikationskennung umfassen und jeweils dazu ausgebildet sind, nach der Authentifizierung eines Paketabholers unter Berücksichtigung der Zuordnung eines Paketfachs (30) eines der Paketautomaten (20, 20') zu einem Versandauftrag eine Zuordnung einer Paketidentifikationskennung zu einem Versandauftrag zu erzeugen und zu speichern.

3. System nach einem der vorhergehenden Ansprüche,
**dadurch gekennzeichnet, dass**
die Empfängerdaten eine E-Mailadresse und/oder eine Telefonnummer eines Empfängers umfassen und
das System dazu ausgebildet ist bzw. die Paketautomaten (20, 20') dazu ausgebildet sind, dem Empfänger eine elektronische Nachricht zu übermitteln und Eingaben bezüglich einer Empfängeradresse, nämlich Daten die einen von dem Empfänger ausgewählten Paketautomaten (20, 20') bezeichnen, von dem Empfänger zu empfangen.

4. Verfahren, umfassend die Schritte:
a) Entgegennahme eines Versandauftrags von einem Smartphone (70) durch einen Server, der kommunikativ mit einem System nach einem der Ansprüche 1 bis 3 verbunden ist, wobei der Versandauftrag Empfängerdaten und Absenderdaten umfasst;
b) Öffnen eines Paketfachs (30) des Systems zur Aufnahme einer Postsendung;
c) Einlegen der Postsendung;
d) Empfangen einer Eingabe, die angibt, ob die Postsendung mit einer Kennzeichnung mit einer Paketidentifikationskennung versehen ist;
e) Speichern der Eingabe in Abhängigkeit von dem Paketfach (30)
f) Feststellen, ob das entriegelte Paketfach (30) geschlossen wurde;
g) Bestimmen einer Paketfachidentifikationskennung des geschlossenen Paketfachs (30);
h) Speichern einer Zuordnung der Paketfachidentifikationskennung zu dem Versandauftrag;
i) Authentifizieren eines Paketabholers;
j) Öffnen des Paketfachs (30) mit einer Postsendung, die nicht mit einer Kennzeichnung mit einer Paketidentifikationskennung versehen ist;
k) Ausgeben einer Kennzeichnung mit einer Paketidentifikationskennung und Aufbringen der Kennzeichnung auf die Postsendung;
l) Speichern einer Zuordnung der Paketidentifikationskennung zu dem Versandauftrag;
m) Gleichzeitiges Öffnen aller Paketfächer (30), die eine Postsendung enthalten, die mit einer Kennzeichnung mit einer Paketidentifikationskennung versehen ist,
wobei die Schritte a), b), c), d), e), f), g) und h) in der genannten Reihenfolge ausgeführt werden,
die Schritte k) und l) nach dem Schritt i) erfolgen,
und nach dem Schritt i), die Schritte j) bis I) jeweils für eine Vielzahl von Paketfächern (30) für die Paketfächer (30), die Postsendungen mit keiner Kennzeichnung enthalten, durchgeführt werden.

5. Verfahren nach Anspruch 4,
**dadurch gekennzeichnet, dass**
der Schritt a) umfasst:
ein Authentifizieren und/oder Registrieren eines Benutzers mittels eines Computers und/oder eines Smartphones.

6. Verfahren nach Anspruch 4 oder 5,
**dadurch gekennzeichnet, dass**
der Schritt b) umfasst:
ein (erneutes) Authentifizieren des Benutzers an einem Paketautomaten (20, 20'), wobei das Entriegeln eines Paketfachs (30) des Paketautomaten (20, 20') nur dann erfolgt, wenn die Authentifizierung erfolgreich ist.

7. Verfahren nach einem der Ansprüche 4 bis 6,
**dadurch gekennzeichnet, dass**
der Schritt e) umfasst:
ein Prüfen, ob eine Postsendung in das entriegelte und/oder geöffnete Paketfach (30) eingelegt wurde, und das Speichern der Zuordnung der Paketfachidentifikationskennung zu dem Versandauftrag nur dann erfolgt, wenn eine Postsendung eingelegt wurde.

8. Computerlesbares Medium mit Instruktionen zur Implementierung des Verfahrens nach einem der Ansprüche 4 bis 7, wenn die Instruktionen ausgeführt werden.

## Claims

1. System for shipping postal items, comprising:
- at least one computing unit (25, 35);
- a plurality of package compartments (30);
- a receiving unit (27, 57) for receiving a shipping order comprising receiver data and shipper data;
- an application which enables a user to create a shipping order by means of a smart phone (70) and transmit it to the receiving unit (27, 57);
- at least one storage unit (60) for storing an assignment of a package compartment (30) to a shipping order;
- at least one authentication unit for authenticating a package collector;
- at least one input unit (21) and/or detection unit (29) for inputting or detecting a package identification code;
wherein the system is designed, after an authentication of a package collector, to enter a pickup mode for unidentified postal items and to ascertain and open at least one package compartment (30) containing a postal item for which no assignment of a package identification code to a shipping order is stored and, after the opening of the at least one package compartment (30) having the postal item, for which no assignment of a package identification code to a shipping order is stored, to detect a package identification code via a detection unit and, in consideration of the detected package identification code and the assignment of the respective package compartment (30) to a shipping order, to generate and store a package identification code and the shipping order,
wherein the system is designed to receive an input indicating whether a postal item inserted in a package compartment is provided with a label having a package identification code and to store the package identification code depending on the package compartment,
wherein the system is designed to store in which package compartment a postal item identified with a package identification code and in which a postal item not identified with a package identification code is located,
wherein the system is designed, depending on an input by a package collector, to enter a retrieval mode for identified or unidentified postal items,
wherein the system is designed in the retrieval mode for identified postal items to open all package compartments for the identified postal items simultaneously, and wherein the system is designed in the retrieval mode for unidentified postal items to open a single package compartment and after the postal item is removed from the package compartment to detect a label which has been applied after the removal to the postal item.

2. System as claimed in claim 1,
**characterized by**
a plurality of package machines (20, 20'), which have communication connections to one another and/or to at least one server (50),
wherein at least some of the package machines (20, 20') each comprise
- at least one computing unit (25),
- at least one authentication unit for authenticating the package collector, and
- at least one input unit (21) and/or detection unit (29) for inputting or detecting the package identification code and are each designed, after the authentication of a package collector, in consideration of the assignment of a package compartment (30) of one of the package machines (20, 20') to a shipping order, to generate and store an assignment of a package identification code to a shipping order.

3. System as claimed in any one of the preceding claims,
**characterized in that**
the receiver data comprise an email address and/or a telephone number of a receiver and
- the system is designed or the package machines (20, 20') are designed to transmit an electronic message to the receiver and to receive inputs with respect to a receiver address, namely data which designate a package machine (20, 20') selected by the receiver, from the receiver.

4. Method, comprising the following steps:
a) accepting a shipping order from a smart phone (70) by way of a server, which has a communication connection to a system as claimed in any one of claims 1 to 3, wherein the shipping order comprises receiver data and shipper data;
b) opening a package compartment (30) of the system to accommodate a postal item;
c) inserting the postal item;
d) receiving an input which indicates whether the postal item has been provided with a label having a package identification code;
e) storing the input depending on the package compartment (30);
f) establishing whether the unlocked package compartment (30) was closed;
g) determining a package compartment identification code of the closed package compartment (30);
h) storing an assignment of a package compartment identification code to the shipping order;
i) authenticating a package collector;
j) opening the package compartment (30) having a postal item which has not been provided with a label having a package identification code;
k) outputting a label having a package identification code and applying the label to the postal item;
l) storing an assignment of the package identification code to the shipping order;
m) simultaneously opening all package compartments (30) containing a postal item
which is provided with a label having a package identification code,
wherein steps a), b), c), d), e), f), g), and h) are carried out in the order mentioned, steps k) and l) take place after step i),
and after step i), steps j) to l) are each carried out for a plurality of package compartments (30) for the package compartments (30) which contain postal items having no label.

5. Method as claimed in claim 4,
**characterized in that**
step a) comprises:
authenticating and/or registering a user by means of a computer and/or a smart phone.

6. Method as claimed in claim 4 or 5,
**characterized in that**
step b) comprises:
a (renewed) authentication of the user at a package machine (20, 20'), wherein the unlocking of a package compartment (30) of the package machine (20, 20') only takes place when the authentication is successful.

7. Method as claimed in any one of claims 4 to 6,
**characterized in that**
step e) comprises:
a check as to whether a postal item was inserted into the unlocked and/or opened package compartment (30), and storing the assignment of the package compartment identification code to the shipping order only takes place if a postal item was inserted.

8. Computer-readable medium having instructions for implementing the method as claimed in any one of claims 4 to 7 when the instructions are carried out.

## Revendications

1. Système pour l'envoi de courriers postaux, comprenant :
- au moins une unité de calcul (25, 35) ;
- une pluralité de casiers à colis (30) ;
- un moyen de réception (27, 57) destiné à recevoir une commande d'envoi qui comprend des données de destinataire et des données d'expéditeur ;
- une application qui permet à un utilisateur de créer une commande d'envoi à l'aide d'un téléphone intelligent (70) et de la transmettre au moyen de réception (27, 57) ;
- au moins un moyen d'enregistrement (60) destiné à enregistrer une affectation d'un casier à colis (30) à une commande d'envoi ;
- au moins un moyen d'authentification destiné à authentifier un enleveur de colis ;
- au moins un moyen d'entrée (21) et/ou un moyen de saisie (29) destiné à entrer respectivement saisir un code d'identification de colis ;
dans lequel le système, après une authentification d'un enleveur de colis, est conçu pour passer dans un mode d'enlèvement de courriers postaux non marqués et pour déterminer et ouvrir au moins un casier à colis (30) qui contient un courrier postal pour lequel aucune affectation d'un code d'identification de colis à une commande d'envoi n'est enregistrée et, après l'ouverture de l'au moins un casier à colis (30) avec le courrier postal pour lequel aucune affectation d'un code d'identification de colis à une commande d'envoi n'est enregistrée, pour saisir un code d'identification de colis par le biais d'un moyen de saisie et, en tenant compte du code d'identification de colis saisi et de l'affectation du casier à colis respectif (30) à une commande d'envoi, pour générer et enregistrer une affectation d'un code d'identification de colis et de la commande d'envoi,
dans lequel le système est conçu pour recevoir une entrée qui indique si un courrier postal déposé dans un casier à colis est muni d'un marquage avec un code d'identification de colis et pour enregistrer le code d'identification de colis en fonction du casier à colis,
dans lequel le système est conçu pour enregistrer dans quel casier à colis se trouve un courrier postal marqué avec un code d'identification de colis et dans lequel se trouve un courrier postal non marqué avec un code d'identification de colis,
dans lequel le système, en fonction d'une entrée faite par un enleveur de colis, est conçu pour passer dans un mode d'enlèvement de courriers postaux marqués ou non marqués,
dans lequel le système, dans le mode d'enlèvement de courriers postaux marqués, est conçu pour ouvrir simultanément tous les casiers à colis des courriers postaux marqués et
dans lequel le système, dans le mode d'enlèvement de courriers postaux non marqués, est conçu pour ouvrir un seul casier à colis et, après avoir prélevé le courrier postal dans le casier à colis, pour saisir un marquage qui est appliqué sur le courrier postal après le prélèvement.

2. Système selon la revendication 1,
**caractérisé par**
une pluralité d'automates de colis (20, 20') qui sont reliés de manière communicante les uns avec les autres et/ou avec au moins un serveur (50),
dans lequel au moins quelques-uns des automates de colis (20, 20') comprennent à chaque fois
- au moins une unité de calcul (25),
- au moins un moyen d'authentification destiné à authentifier l'enleveur de colis et
- au moins un moyen d'entrée (21) et/ou un moyen de saisie (29) destiné à entrer respectivement à saisir le code d'identification de colis et qui, après l'authentification d'un enleveur de colis en tenant compte de l'affectation d'un casier à colis (30) d'un des automates de colis (20, 20') à une commande d'envoi, sont à chaque fois conçus pour générer et enregistrer une affectation d'un code d'identification de colis à une commande d'envoi.

3. Système selon l'une des revendications précédentes,
**caractérisé en ce que**
les données de destinataire comprennent une adresse email et/ou un numéro de téléphone d'un destinataire et
le système est conçu, respectivement les automates de colis (20, 20') sont conçus, pour transmettre au destinataire un message électronique et recevoir du destinataire des entrées relatives à une adresse de destinataire, à savoir des données qui définissent un automate de colis (20, 20') choisi par le destinataire.

4. Procédé, comprenant les étapes :
a) prendre une commande d'envoi par un téléphone intelligent (70) par le biais d'un serveur qui est relié de manière communicante à un système selon l'une des revendications 1 à 3, dans lequel la commande d'envoi comprend des données de destinataire et des données d'expéditeur ;
b) ouvrir un casier à colis (30) du système destiné à recevoir un courrier postal ;
c) déposer le courrier postal ;
d) recevoir une entrée qui indique si le courrier postal est muni d'un marquage avec un code d'identification de colis ;
e) enregistrer l'entrée en fonction du casier à colis (30) ;
f) constater si le casier à colis (30) déverrouillé est refermé ;
g) déterminer un code d'identification de casier à colis du casier à colis (30) fermé ;
h) enregistrer une affectation du code d'identification de casier à colis à la commande d'envoi ;
i) authentifier un enleveur de colis ;
j) ouvrir le casier à colis (30) avec un courrier postal qui n'est pas muni d'un marquage avec un code d'identification de colis ;
k) distribuer un marquage avec un code d'identification de colis et appliquer le marquage sur le courrier postal ;
l) enregistrer une affectation du code d'identification de colis à une commande d'envoi ;
m) ouvrir simultanément tous les casiers à colis (30) qui contiennent un courrier postal qui est muni d'un marquage avec un code d'identification de colis,
dans lequel
les étapes a), b), c), d), e), f), g) et h) sont exécutées dans ledit ordre,
les étapes k) et l) sont effectuées après l'étape i),
et, après l'étape i), les étapes j) à l) sont réalisées à chaque fois pour une pluralité de casiers à colis (30) pour les casiers à colis (30) qui contiennent les courriers postaux sans aucun marquage,

5. Procédé selon la revendication 4,
**caractérisé en ce que**
l'étape a) comprend :
une authentification et/ou une comptabilisation d'un utilisateur à l'aide d'un ordinateur et/ou d'un téléphone intelligent.

6. Procédé selon la revendication 4 ou 5,
**caractérisé en ce que**
l'étape b) comprend :
une (nouvelle) authentification de l'utilisateur sur un automate de colis (20, 20'), dans lequel le déverrouillage d'un casier à colis (30) de l'automate de colis (20, 20') ne s'effectue que si l'authentification a réussi.

7. Procédé selon l'une des revendications 4 à 6,
**caractérisé en ce que**
l'étape e) comprend :
une vérification si un courrier postal dans le casier à colis (30) déverrouillé et/ou ouvert a été déposé, et l'enregistrement de l'affectation du code d'identification de casier à colis à une commande d'envoi ne s'effectue alors que si un courrier postal a été déposé.

8. Support lisible par ordinateur avec des instructions pour la mise en œuvre du procédé selon l'une des revendications 4 à 7 lorsque les instructions sont exécutées.
